# EUROPEAN PATENT SPECIFICATION

(11) **EP 2 703 808 B1**
(45) Date of publication and mention of the grant of the patent: **25.10.2017**
(21) Application number: 13182253.8
(22) Date of filing: 29.08.2013
(51) Int. Cl.: G01N 30/20, G01N 30/34

(54) **Method and apparatus for split-flow-mixing liquid chromatography**
Verfahren und Vorrichtung für splitstrommischende Flüssigkeitschromatographie
Procédé et appareil de chromatographie en phase liquide à mélange de débit divisé

(30) Priority: 31.08.2012 US 201213601669
(43) Date of publication of application: 05.03.2014
(73) Proprietor: Thermo Finnigan LLC, San Jose, CA 95134 (US)
(72) Inventor: Herman, Joseph L., West Chester, PA 19382 (US)
(74) Representative: Boult Wade Tennant

(56) References cited:
- EP-A1- 2 317 310
- WO-A2-2007/109529
- WO-A2-2008/036586
- GB-A- 2 410 703
- US-A- 5 801 302
- US-A1- 2012 145 617
- US-A1- 2013 014 568

## Description

### FIELD OF THE INVENTION

This invention relates to high performance liquid chromatography (HPLC), and more specifically to techniques for capturing small quantities of analytes injected in organic solvents onto HPLC columns, especially for the purpose of subsequent detection and analysis.

### BACKGROUND OF THE INVENTION

High-Performance Liquid Chromatography (HPLC) is widely used to separate analytes in liquid samples. Typical HPLC instruments use a high pressure pump for forcing a suitable sample-bearing mobile phase at a constant flow rate through one or more chromatographic separation columns. The sample components are separated within the separation column by one or more mechanisms including sorption, size exclusion, ion exchange or other interactions with the chromatography packing. The sample components are then detected by any conventional detector, e.g., a UV-visible detector, a fluorescence detector, an infrared detector, a mass spectrometer, a Raman detector, or a detector that measures refractive index or conductivity, as just a few examples.

The utility of separations by HPLC has been demonstrated over a broad range of applications including the analysis and purification of molecules ranging from low to high molecular weights. The separation process relies on the fact that a number of component solute molecules in a flowing stream of a fluid percolated through a packed bed of particles, known as the stationary phase, can be efficiently separated from one another. Generally, separation in liquid chromatography is achieved in a column by selective distribution of the sample molecules between a stationary phase and a mobile phase. The individual sample components are separated because each component has a different affinity for the stationary phase, leading to a different rate of migration for each component and a different exit time for each component emerging from the column. The separation efficiency is determined by the amount of spreading of the solute band as it traverses the bed or column.

Reversed-phase liquid chromatography (RP-HPLC) is widely used as a mode of separation in high performance liquid chromatography (HPLC). In the RP-HPLC technique, the solvent(s) employed in the mobile phase is/are more polar than the stationary phase, whereas the reverse situation is true in conventional (normal phase) chromatography performed prior to development of RP-HPLC. The mobile phase solvents typically employed in reversed phase liquid chromatography systems comprise water and one or more water-miscible organic modifiers, for example, acetonitrile or methanol. Analyte species of-interest typically form a solution with the mobile phase. The RP-HPLC stationary phase is usually highly hydrophobic or non-polar. The affinity of a chemical species for a stationary phase, which affects the rate at which the particular species in a flowing mobile phase passes through the stationary phase, results primarily from interaction of the species with chemical groups present on the stationary phase. These chemical groups may be provided on the stationary phase by reacting a surface-modifying reagent with a substrate, such as a silica substrate. Surface-modifying agents may thus be employed to adsorb specific chemical groups onto the stationary phase. Conventional reversed-phase liquid chromatography uses 3-10 µm spherical silica beads that have been modified by covalent attachment of hydrocarbon chains including 4, 8, or 18 carbon atoms to provide a non-polar surface.

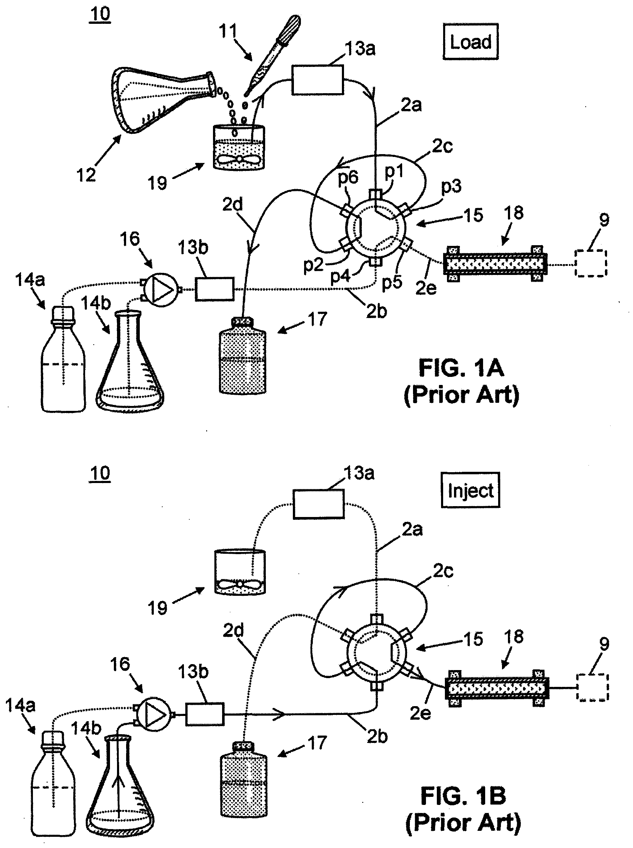

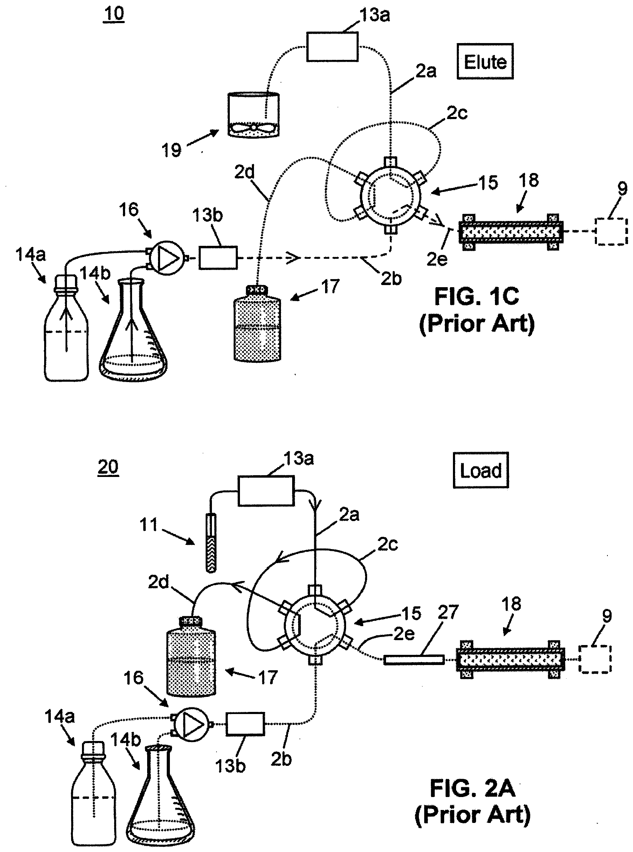

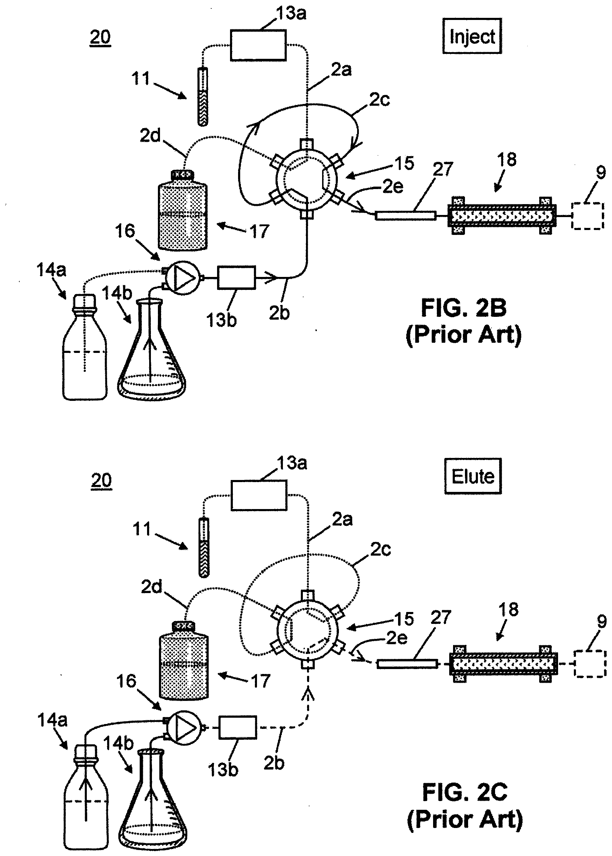

One difficulty that may occur in the performing of RP-HPLC separations is that, when large volumes of analytes in organic solvents are injected into the chromatographic apparatus, the injected volume can exceed the column volumes resulting in the analytes not being able to be retained on a reversed phase HPLC stationary phase. Since there is an ongoing trend in the field of chromatography towards smaller (lower volume) columns, this difficulty has become more significant in recent years. In order to reduce the amount of total organic solvents in the mobile phase seen by the column when the sample volume reaches the column, one can mix the sample volume with an aqueous mobile-phase solvent prior to reaching the column. As an example, FIG. 1 illustrates a conventional HPLC system in which the mixing is performed prior to loading a sample into a chromatographic apparatus. FIGS. 2-3, discussed subsequent to the discussion of FIG. 1, illustrate examples of conventional HPLC systems in which the mixing is performed subsequent to loading.

As shown in FIG. 1A, an analyte-bearing sample in an organic solvent is provided from sample source **11** and mixed with aqueous solvent from solvent source **12** in mixing apparatus **19.** The mixture is then delivered to a port of a multi-port valve **15** through tubing **2a** under the impetus of pump **13a.** The multi-port valve **15** is configured, during a loading step or stage, to deliver the mixture containing the sample portion to be analyzed to looped tubing **2c.** Any excess solvent or sample is delivered to waste container **17** through tubing **2d,** which is fluidically coupled to a port of the multi-port valve.

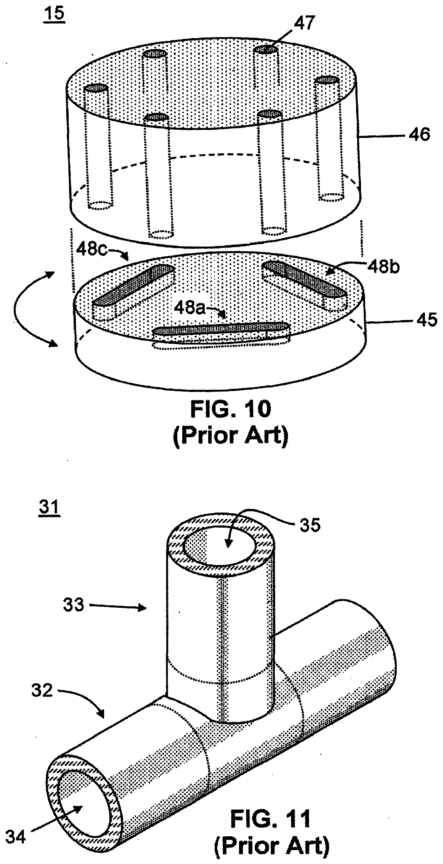

FIG. 10 is a schematic illustration of an example of a multi-port valve as may be employed within systems in accordance with the present teachings. The multi-port valve **15** shown in FIG. 10 comprises, in known fashion, a stator portion **46** having a plurality of bores or passageways **47** therein passing through the stator portion from one end to another end and a rotor portion **45** having a plurality of grooves or channels **48a-48c** therein, the grooves or channels disposed on a side of the rotor portion **45** that faces the stator portion **46.** As shown, the stator portion **46** comprises six bores or passageways **47** that correspond, for example, to the ports **p1-p6** of the valve **15** as shown in FIG. 1A. The rotor portion **45** may rotate, as illustrated by the double-headed arrow in FIG. 10, so as to maintain faces of the rotor and stator portions in mutual contact and so that the grooves or channels **48a-48c** may be configured so as to fluidically interconnect alternative sets of adjacent bores or passageways **47.** Although a rotary valve is shown, the invention is not intended to be limited to such, as the rotary valve is but one example of a valve which may be employed.

It should be noted in reference to this and other of the appended drawings that tubing segments shown in either solid or dashed lines are thereby indicated as those segments through which fluid flow occurs, whereas tubing segments shown in dotted lines are thereby indicated as being inactive. Dashed lines are used - as opposed to solid lines - so as to indicate tubing segments though which a flow of mixed solvents occurs, the mixture including solvents provided by both sources **14a** and **14b**. It should be noted that the designations of "inactive" tubings only pertain to the discussion of the particular embodiment under discussion. Depending upon system configuration and operation, it is possible that some tubing segments shown as "inactive" with regard to the particular embodiment under discussion may, in fact, be actively transporting fluids in conjunction with some other function or process. As but one example, in some chromatographic systems, depending upon system configuration and mode of operation, the sample loop (tubing **2c**) may be continuously provided with sample material from one or more sources, even during elution stages (i.e., FIG. 1C) during which time the sample loop tubing is indicated as being "inactive" according to the present discussions. It should be further noted that, although the word "tubing" is used in the present description to describe the means by which fluid is transferred from one location to another, one of ordinary skill in the art will readily recognize that such tubing lengths might be replaced by any form of conduit, such as channels that are etched or machined into one or more substrates. Accordingly, any form of conduit may be employed in place of tubing, *per se.* It should be still further noted that the looped tubing **2c** is frequently referred to as an "injection loop". The word "loop" as used herein and in the common usage in the art is not meant to necessarily imply any particular geometrical configuration of the tubing (or other form of conduit) but, instead refers to the fluidic coupling of the tubing, at its two ends, to two separate ports of the multi-port valve.

After collection of a portion of the mixture containing the sample portion to be analyzed, the valve is reconfigured as shown in FIG. 1B so as to deliver the portion of the mixture to a chromatographic column **18.** In the "injection" configuration shown in FIG. 1B, an aqueous mobile phase solvent provided by solvent source **14b** is caused to flow, under the impetus of pump **13b,** through gradient valve **16** and tubing **2b** so as to enter a port of the multi-port valve **15** and thereby mix with and expel the mixture portion previously collected in tubing **2c.** The expelled mixture of sample and solvents passes through tubing **2e** to the chromatographic column **18.** In this injection stage or step, the mobile phase solvent is chosen such that the analyte or analytes are preferentially partitioned onto the stationary phase. In this way, the analyte or analytes are preferably "focused" on the stationary phase - in other words, caused to reside within a narrow zone of the stationary phase within the column by adsorbance onto the stationary phase.

During the elution stage or step of the conventional system **10** (FIG. 1C), the gradient valve **16** is configured so as to provide a mixture of solvents from the two solvent sources **14a, 14b** into the tubing **13b.** The multiport valve may be configured so as to deliver the mixture of solvents directly to tubing **2e** and then to column **18.** The solvents are chosen such that the analyte or analytes have a greater affinity for the solvent from solvent source **14a** than for the solvent from solvent source **14b.** Using the RP-HPLC technique, this condition is generally fulfilled by choosing the solvent from source **14a** so as to be more non-polar than or less aqueous than the solvent from source **14b.** During the course of the elution, the gradient valve may be operated so as to progressively increase the proportion of the solvent from solvent source **14a.** In this way, analytes may be removed from the column one-by-one in the reverse order from the strength of their binding onto the stationary phase. The thus separated analytes are passed out of the column and delivered sequentially to a detector **9.**

As noted above, in some situations, an undesirable situation may occur in which the injected volume of organic material exceeds the column volume, as a result of a high volume of organic solvent. The high organic content thereby causes an undesirable situation in which there will be no absorption to the stationary phase of the analytes of interest, i.e. the analytes of interest are not retained on the column. FIG. 1, discussed above, illustrates one conventional solution to this problem in which the volume of organic solvents is diluted with an aqueous mobile phase prior to being loaded into the chromatographic system. This solution suffers from a possible disadvantage in that, if the analytes of interest are initially present in low concentration in the original sample, then the subsequent dilution with aqueous solvent may cause insufficient analyte material to be retained within the loop tubing 2c during a loading step.

FIG. 2 represents a second conventional chromatographic system **20** in which mixing with an aqueous solvent is performed using an in-line mixing apparatus **27.** Because the mixing is performed subsequent to sample loading, the system **20** does not include an external mixing apparatus, such as the mixing apparatus **19** shown in FIG. 1. Instead, undiluted sample from sample source **11** is delivered into the tubing **2a** during the loading step (FIG. 2A). Other aspects of the loading step are similar to those already discussed in reference to FIG. 1.

In the subsequent injection step, (FIG. 2B), the collected sample is expelled from tubing **2c** and into tubing **2e** by flushing with solvent from solvent source **14b** as previously described above with reference to FIG. 1B. However, in contrast to the operation illustrated in FIG. 1B, the tubing **2e** does not immediately direct the sample into the column **18.** Instead, the sample fluid is passed through an intervening in-line mixing apparatus **27** within which it is mixed with and diluted by the aqueous solvent that flushes it from and follows it out of the tubing **2c.** The mixing of the sample with the aqueous solvent dilutes the concentration of organic solvent within the mobile phase that is delivered to the column such that adsorption of the analytes of interest onto the stationary phase can occur.

Various types of in-line mixing apparatuses are available for use as the mixing apparatus **27.** These devices generally incorporate some form of internal flow disruption mechanism - such as inert granules, baffles or vanes, spinning propellers, off-axis fluid introduction ports, etc. - so as to increase the interaction path length and interaction volume within which separately introduced fluids are able to mix. Such mixing devices are available in various sizes. Various such devices are also known as "mixing columns". For mixing a sample with a diluent, the internal volume of the mixing apparatus is ordinarily chosen based on the extent to which the percentage of introduced organic solvents needs to be diluted in order for the analyte of interest to be retained by the column.

As one example, the volume of the aqueous solvent provided to the mixing apparatus **27** by solvent source **14b** may be controlled to be up to three-times, four-times, etc. greater than the volume of sample provided from looped tubing **2c,** thereby diluting the concentration of all sample and solvent species originally present in sample source **11** by at least a factor of 3, 4, etc. The sample and diluent flow into the mixing device so as to fill and mix within its internal volume prior to being released to the column **18.** This feature of the operation of the in-line mixing device adds additional system void volume and can add additional delay to the sample analysis. Thus, for example, if a sample of 100 µL is introduced into the mixing device and a dilution to 20% of the original concentration is required, then an in-line mixing device having an internal volume of 500 µl would be conventionally employed. For this sample size, a common flow rate is, however, just 500 µL per minute. Thus, the use of a conventional apparatus would add at least one minute to each sample separation. This added time may become significant in an automated system (for example, in a clinical laboratory) in which many samples are run consecutively.

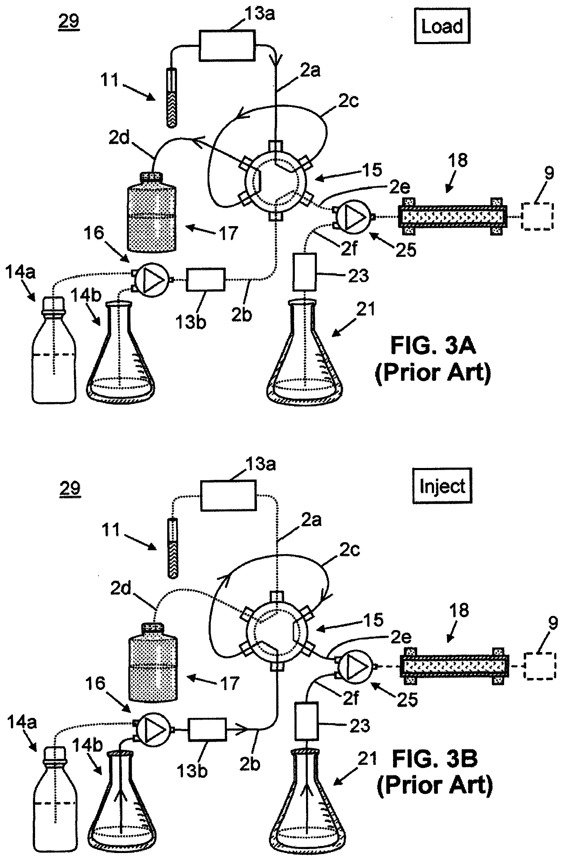

FIG. 3 depicts a third conventional chromatographic system **29.** Similarly to the operation of the system **20** (FIG. 2) the mixing of the sample with aqueous solvent is performed, within the chromatographic system **29,** subsequent to sample loading and downstream from the multi-port valve **15.** However, instead of employing an in-line mixing apparatus, the system employs an auxiliary gradient valve **29** in conjunction with an auxiliary pump **23** and auxiliary source **21** of aqueous solvent. Tubing **2f** delivers a flow of aqueous solvent from the auxiliary solvent source **21** at a chosen flow rate so as to continuously mix with and dilute the sample that is provided to the auxiliary gradient valve **15** through tubing **2e.** Alternatively, the aqueous solvent could be drawn from the solvent source **14b.**

Whereas the in-line mixing apparatus **27** of the system **20** (FIG. 2) performs mixing of the entire volume of sample together with an entire chosen volume of solvent, the auxiliary gradient valve of the system **29** (FIG. 3) performs continuous mixing of the flows of sample and solvent provided by the tubing segments **2e** and **2f,** respectively. As one example, the rate of flow of the aqueous solvent provided by solvent source **21** may be controlled to be up to three-times, four-times, etc. greater than the flow of sample that passes through tubing **2e,** thereby diluting the concentration of all sample and solvent species originally present in sample source **11** by at least a factor of 3, 4, etc. The ratio between the rates of flow of sample and solvent may be controlled by the auxiliary gradient valve **25.**

Despite the dilution of the sample in either the system **20** (FIG. 2) or the system **29** (FIG. 3), all or most analyte species are retained for subsequent detection, since their flow through the column is arrested by adsorbance onto the stationary phase within the column **18.** By contrast, the pre-dilution technique illustrated in FIG. 1 may reduce the total amount of analyte available for detection as a result of the finite volume of diluted sample collected in looped tubing **2c.** In the elution stage (FIG. 3C), either the auxiliary pump **23** is turned off or the auxiliary valve **25** is configured to prevent flow of the aqueous solvent from the auxiliary solvent source **21.** In operation of either the system **20** or the system **29,** the elution stage proceeds essentially as previously described in reference to FIG. 1C, with a mixture of solvents being supplied to the column **18** from the two solvent sources **14a, 14b**. A programmed time variation in the relative proportions of the two solvents delivered to the column may be employed so as to remove analyte species from the column sequentially so as to be detected, each in turn, by the detector **9.**

Although the conventional chromatographic techniques illustrated in FIGS. 1-3 and discussed above can be and have been employed successfully, they each suffer some drawbacks. For example, the conventional pre-dilution technique illustrated in FIG. 1 requires an additional sample preparation step and, as noted above, can reduce the total amount of analyte available for detection. The conventional in-line mixing technique illustrated in FIG. 2 introduces additional "dead volume" into the fluid pathway as noted above. The additional dead volume may degrade chromatographic separation and resultant data quality and also introduces additional time delay. The system **29** illustrated in FIG. 3 requires the chromatograph system to include an additional pump as well as an additional valve, thereby increasing system cost and size.

In light of the above considerations, there is a need in the art for a chromatography method and apparatus that can successfully capture and detect small levels of organic analyte species in the presence of excess organic solvent without requiring an extra pump and mixing apparatus and without adverse effects on spectral quality or analysis speed.

EP 2,317,310 describes a pressure control apparatus for a supercritical fluid which can be used in supercritical fluid chromatography. The pressure control apparatus controls the oscillations of pressure about the target value which is associated with the conventional operation of a super-critical pressure control valve. The pressure control apparatus has a valve element wherein the amount by which it can travel backwards into its open position is restricted by the position of the variable shaft. The optimum valve-opening rate is that which minimizes short-term pressure variations and depends on the target pressure value.

WO 2007/109529 describes methods and apparatus for placing a sample in a chromatographic system which seek to reduce pressure and flow perturbations in fluid conduits. The methods and apparatus feature placing samples held in a sample loop to pressurization prior to placing such sample loop in communication with high pressure conduits.

### SUMMARY

According to a first aspect of the present teachings, a method for chromatographically separating analytes of a liquid sample is provided as set out in claim 1.

The step (ii) of providing a first solvent mixture for the sample may comprise providing the first solvent mixture in a fashion such that, when mixed with the sample at the mixing tee-junction, the first solvent mixture causes dilution of the total organic solvent content of the sample. In various embodiments, the step (iii) may include causing the flow of the first solvent mixture to pass through a splitting tee-junction so as to be split thereat into the first flow portion that flows along the first pathway and a second flow portion that flows into and through the second pathway. In various other embodiments, the step (iii) may include causing the flow of the first solvent mixture to pass through a three-port valve so as to be split thereat into the first solvent flow portion that flows into the conduit and the second solvent flow portion that flows into and through the second pathway, said three-port valve having a flow adjustment mechanism operable to control a ratio between flow rates of the first and second solvent flow portions. The flow adjustment mechanism may be controlled manually or automatically. Also, the step (iii) may comprise, in various embodiments, splitting the flow of the first solvent mixture into a first solvent flow portion that flows into the conduit through a multi-port valve and a second solvent flow portion that bypasses the multi-port valve. The ratio between a flow rate of the first solvent flow portion and a flow rate of the second solvent flow portion may be controlled by choosing a length or inner diameter of the second conduit.

According to a second aspect of the present teachings, a chromatography system is provided as set out in claim 8.

### BRIEF DESCRIPTION OF THE DRAWINGS

The above noted and various other aspects of the present invention will become apparent from the following description which is given by way of example only and with reference to the accompanying drawings, not drawn to scale, in which:
FIGS. 1A-1C are schematic depictions of chromatography loading, injection and elution stages, respectively, in accordance with a first conventional chromatography system and method;
FIGS. 2A-2C are schematic depictions of chromatography loading, injection and elution stages, respectively, in accordance with a second conventional chromatography system and method;
FIGS. 3A-3B are schematic depictions of chromatography loading and injection stages, respectively, in accordance with a third conventional chromatography system and method;

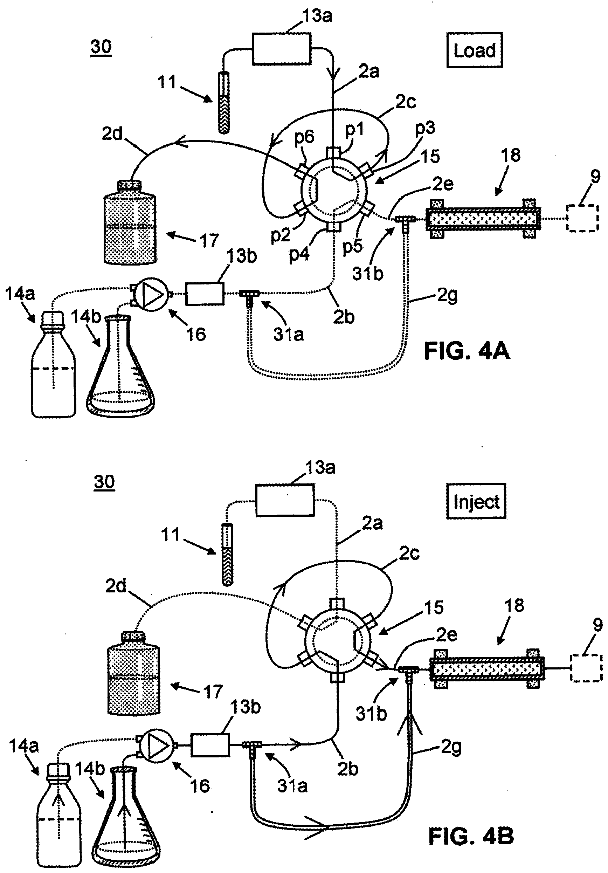

FIGS. 4A-4C are schematic depictions of chromatography loading, injection and elution stages, respectively, in accordance with a first chromatography system and method of the present teachings;

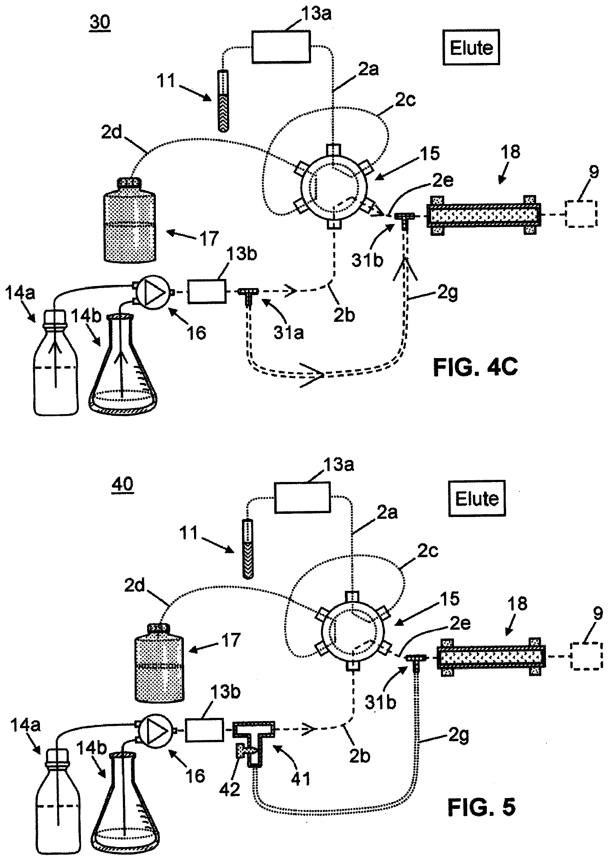

FIG. 5 is a schematic depiction of the elution stage in accordance with a second chromatography system and method of the present teachings;

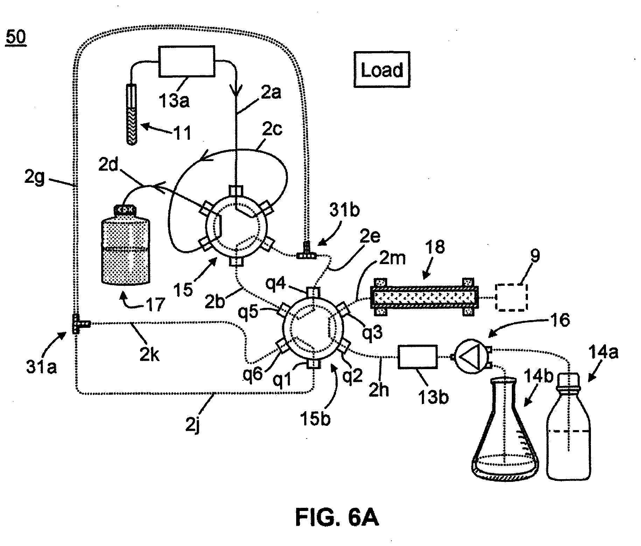

FIGS. 6A-6C are schematic depictions of chromatography loading, injection and elution stages, respectively, in accordance with a third chromatography system and method of the present teachings;

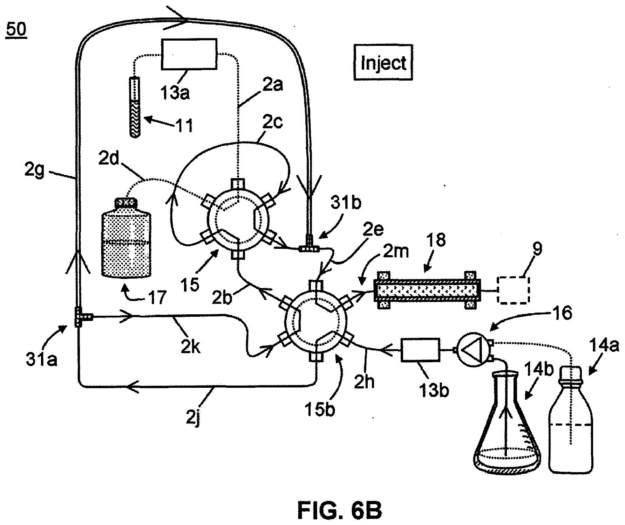

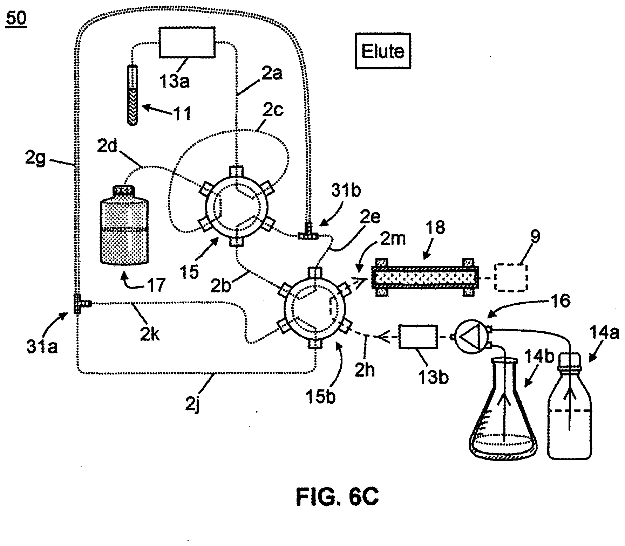

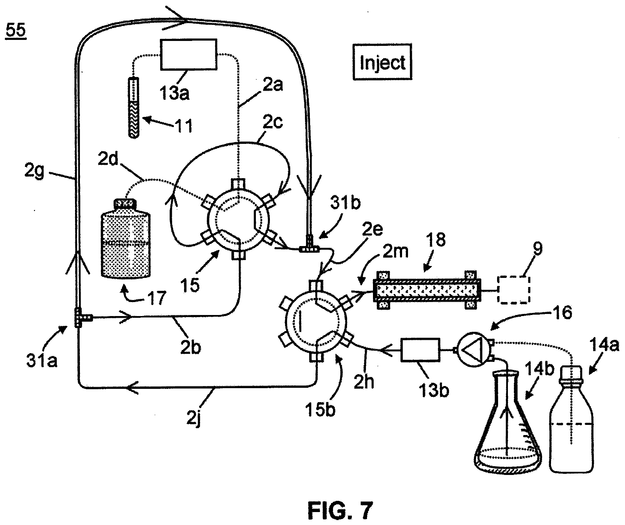

FIG. 7 is a schematic depiction of the chromatography injection stages in accordance with another chromatography system and method of the present teachings and representing a modified version of the system and method depicted in FIG. 6;

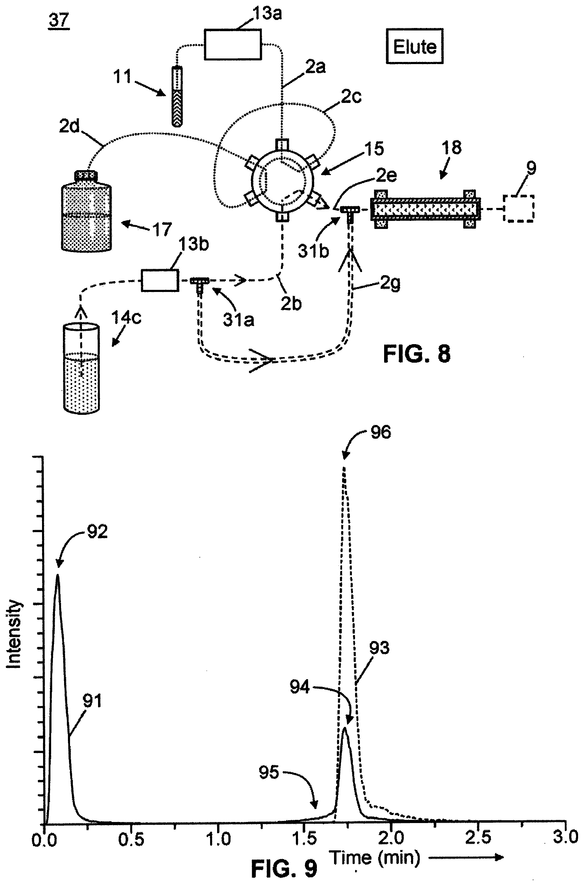

FIG. 8 is a schematic illustration the elution step of another chromatography system in accordance with the present teachings;
FIG. 9 is a set of chromatograms of 100 µL injections of 2 µg/mL solutions of testosterone in methanol, one chromatogram obtained using a conventional configuration and the other chromatogram obtained employing a system in accordance with the invention;
FIG. 10 is a schematic illustration of an exemplary rotary valve assembly as may be employed as a multi-port valve within an apparatus in accordance with the present teachings;
FIG. 11 is a schematic illustration of an exemplary tee-junction; and

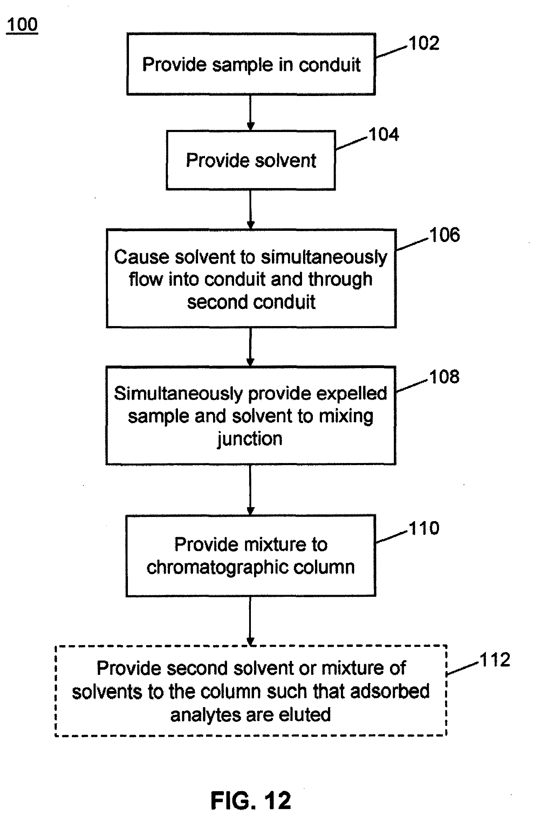

FIG. 12 is a flow diagram of a chromatography method in accordance with the present teachings.

### DETAILED DESCRIPTION

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. The particular features and advantages of the invention will become more apparent with reference to the appended FIGS. 1-12, taken in conjunction with the following description.

The present invention may be practiced in conjunction with chromatographic methods and systems employing either gradient elution or isocratic elution. Gradient elution, which is the most common type, is illustrated in detail in FIGS. 4-7 and in the following discussion pertaining to those figures. Some variations relating to isocratic elution are illustrated in FIG. 8 as well as in a following discussion pertaining to that figure.

FIGS. 4A-4C are schematic depictions of chromatography loading, injection and elution stages, respectively, of a first chromatography system in accordance with the present teachings. The system **30** illustrated in FIG. 4 comprises many components that are identical are similar in function and disposition to components in the chromatography systems **10** (FIG. 1), **20** (FIG. 2) and **29** (FIG. 3). Such identical or similar components are recognized by their similar reference numbers, with regard to FIGS. 1-3, and the reader is referred to the above discussion in the background section for descriptions of these components and their functions. For reference, the first, second, third, fourth, fifth and sixth ports of the multi-port valve **15** are respectively labeled as ports **p1, p2, p3, p4, p5** and **p6** in FIG. 4A. This scheme of port labeling is understood to apply throughout this description; however, the numbering of the ports is arbitrary. Although the multi-port valve **15** is illustrated as comprising exactly six ports circularly arranged in the appended drawings, it should be understood that valves with some other total number of ports or with some different geometrical configuration of the ports could also be employed, provided that such valves are able to fluidically interconnect the various ports as shown and described herein.

Similarly to the functioning of the system **29** (FIG. 3), the system **30** (FIG. 4) operates so as to mix diluent aqueous solvent with sample fluid at a position that is fluidically between the injection loop tubing **2c** and the chromatographic column **18.** However, in contrast to the system **20,** the system **30** includes neither the auxiliary solvent source, the auxiliary pump, the auxiliary valve, nor the in-line mixing apparatus. Instead, in the system **30,** a portion of the solvent or solvents provided by the solvent sources **14a,14b** during the injection stage (FIG. 4B) is diverted into a bypass tubing **2g** by a splitting tee-junction **31a** that is fluidically disposed upstream from the multi-port valve **15.** The remaining portion of the solvent or solvents - that is, the portion that is not split off into bypass tubing **26 -** continues, during the injection stage, to flow into tubing **2b** from which it proceeds to mix with the sample in injection loop tubing **2c** and to expel the sample from that tubing, as described above. The diverted portion of the solvent or solvents mixes with the sample fluid, during the injection stage at mixing tee-junction **31b just** prior to entry of the sample and solvents into the column **18.**

Each of the splitting tee-junction **31a** and the mixing tee-junction **31b** may be in the form of a simple fluid tubing connecting device **31** as is schematically illustrated in FIG. 11. For clarity of description, it is here noted that a "tee-junction" (or alternatively, a "T-junction") is generally a device that may be roughly shaped (or approximately shaped) in the form of the alphabetic letter "T" and that is used to interconnect three separate lengths of fluid tubing. For example, the tee-junction **31** shown in FIG. 4 comprises an integral device that includes a first tube-like portion **32** having bore **34** and an intersecting second tube-like portion **33** having bore **35.** In operation, three respective fluid tubing lengths are fluidically coupled to the two ends of bore **34** and to the end of bore **35.** A fluid flow entering the device **31** from a first end of bore **34** will, in general, split into two flow portions such that one flow portion exits through an opposite end of bore **34** and such that the other flow portion exits through bore **35.** Also, the device **31** may be used for mixing two entering fluid flow portions into a single mixed fluid flow that exits the device. Although the second tube-like portion **33** is illustrated as being at right angles to the first tube-like portion **32** in FIG. 11, it should be understood that, in fact, these tube-like portions may be disposed at any acute or oblique angle to one another. For example, some tee-junctions may be configured in the form of the letter "Y" or shaped similarly to an arrow head so as to assist in fluid convergence or divergence. Thus, the term "tee-junction", as used herein, is meant to encompass all such variations.

Comparison of FIG. 4B with either FIG. 2B or FIG. 3B shows that the mixing tee-junction **31b** fulfills the function of diluting the sample fluid with aqueous solvent, similar to the function performed by the in-line mixing apparatus **27** of the system **20** or the combination of the pump **23** and the gradient valve **25** of the system **29.** However, in the novel system **30,** the auxiliary pump is eliminated, since diluent aqueous solvent is provided to the mixing tee-junction **31b** from bypass tubing **2g** under the impetus of the pump **13b.** This elimination of the conventionally used auxiliary pump reduces system cost, size and complexity. The relative proportioning of solvent flow, at the splitting tee-junction **31a,** between the bypass tubing **2g** and the tubing **2b** may be controlled or determined by the relative fluid resistance between the two fluidic pathways between which the flow is split. For example, if the length of the fluidic pathway between the tee-junctions along the bypass tubing **2g** is kept equal to the total length of the altenative fluidic pathway that includes the tubing **2b,** tubing **2c** and tubing **2e** as well as the total fluidic pathways through the multi-port valve **15,** then the relative flow rates may be determined by the ratio of the inner diameters at the most constricted portions of the respective pathways. Accordingly, the relative proportioning could, in this example, be set by choosing a bypass tubing **2g** having a certain inner diameter. In FIG. 4 as well as in subsequent figures, the bypass tubing **2g** is schematically illustrated as being thicker than other tubing segments, so as to carry the larger flow proportion. Alternatively, the resistance to fluid flow within the bypass tubing **2g** could be controlled by choosing the length of the tubing, by choosing both the length and inner diameter of the tubing or by choosing some other property or some combination of properties of the tubing or its connections.

Furthermore, the conventionally used in-line mixing apparatus **27** is eliminated, in the system **30,** in favor of the simple mixing tee-junction **31b,** thereby reducing cost and eliminating additional dead volume and the time delay associated with the in-line mixing apparatus **27.** Because there is merely a confluence of separate fluid flows, essentially no additional dead volume is introduced by the use of the tee-junction **31b.** Accordingly, any adverse effects of such additional dead volume are eliminated in the novel system.

The column injection stage of the operation of the system **30** has been described in the above paragraphs with reference to FIG. 4B. The operation of the loading stage (FIG. 4A) is similar to that already described in reference to FIGS. 1-3 and such description is not repeated here. The operation of the elution stage of the system **30** is illustrated in FIG. 4C. As previously described, during the elution stage, the relative proportions of the two solvents provided from solvent sources **14a, 14b** may be varied with time during the elution process (gradient elution) so as to yield a series of solvent mixtures of different compositions. Since the simple splitting tee-junction **31a** may not have a shut-off capability, the flow of all such mixtures may be split between two pathways as shown in FIG. 4C.

The splitting of mobile phase between the two pathways (at the tee-junction **31a**) may cause the time variation of the composition of the mobile phase during performance of a gradient elution to deviate from what it would otherwise be in the absence of the bypass tubing **2g.** For example, the fluid resistance and length of the bypass tubing may be such that a portion of the mobile phase having a certain composition that is diverted into the bypass tubing **2g** is caused to arrive at the mixing tee-junction **31b** slightly sooner (or later) than the portion of the same composition that flows through the valve **15.** In such a situation, the composition of the mobile phase that exits in the mixing tee-junction **31b** at any given time may be different from what would be predicted using a conventional system (i.e., without the bypass tubing **2g** and the tee-junctions **31a, 31b**). This effect may be compensated through a calibration procedure that determines how the proportions of the mobile phase solvents determined by the gradient valve **16** should be adjusted, in time, so as to account for the non-simultaneous arrival times. The resulting calibration - comprising timing adjustments of the gradient valve - could then be incorporated into any existing chromatography method.

Alternatively, a configuration as shown in FIG. 5 could be employed in order to control the splitting of the flow of mobile phase solvents. In the alternative system **40** shown in FIG. 5, the splitting tee-junction is replaced by a three-port valve **41** having a flow adjustment mechanism **42,** such as, for instance a needle valve mechanism, that can vary the proportion of flow diverted into tubing **2g** from zero percent to some positive percentage, perhaps up to 100 percent. In this fashion, the pathway of elution solvents may be controlled. Further, the flow adjustment mechanism **42** could also be employed during the column injection stage so as to control the relative proportioning of aqueous solvent between tubing **2b** and the bypass tubing **2g** thereby controlling or choosing the dilution factor at the mixing tee-junction **31b.** Control of the adjustment mechanism **42 -** either manual control or automatic control - may thus be employed to variably configure the dilution factor for optimal use with each of various different samples, different solvents, or different analytical methods. Automatic control may be provided by a computer or other programmable controller device (not shown) that is electronically coupled to the adjustment mechanism.

FIGS. 6A-6C are schematic depictions of chromatography loading, injection and elution stages, respectively, in accordance with a third chromatography system **50** in accordance with the present teachings. The system **50** illustrated in FIG. 6 includes many components in common with the system **30** previously described with reference to FIG. 4. These common components include: the sample source **11;** first pump **13a;** multi-port valve **15;** waste container **17**; solvent sources **14a, 14b;** gradient valve **16;** second pump **13b;** tubing segments **2a, 2b, 2c, 2d, 2e** and **2g** and tee-junctions **31a** and **31b.** The functions of these common components are identical or essentially similar between the system **30** and the system **50.** The system **50** further includes a second multi-port valve **15b** that is fluidically interposed: (a) between the second pump **13b** and the first multi-port valve **15;** (b) between the second pump **13b** and the column **18;** (c) between the second pump **13b** and the splitting tee-junction **31a;** (d) between the column **18** and the mixing tee-junction **31b;** and, optionally, (e) between the splitting tee-junction **31a** and the first multi-port valve **15.** As illustrated, the second multi-port valve **15b** may comprise six ports; these are labeled as second-valve ports **q1, q2, q3, q4, q5** and **q6** in FIG. 6A. The provision of the second multi-port valve **15b** necessitates the inclusion of additional tubing segments, such as tubing segments **2h, 2j** and **2k** and **2m** shown in FIG. 6.

The loading stage of operation of the system **50** (FIG. 6A) is similar to the loading stage of the operation of the system **30** (FIG. 4A). The injection stage (FIG. 6B) is, likewise, similar to the injection stage of the operation of the system **30** (FIG. 4B) in that the flow of aqueous solvent from solvent supply **14b** is split at splitting tee-junction **31a** into (a) a first portion that flows through the valves **15b, 15** and through the sample loop tubing **2c** so as to flush sample fluid out of the sample loop tubing **2c** and into the column **18** and (b) a second, larger portion, that is diverted into bypass tubing **2g** and serves to dilute the sample at mixing tee-junction **31b.** The main difference during this injection stage, relative to the system 30, is that the fluid flows pass through the second multi-port valve **15b.**

During the operation of the elution stage of the system **50** (FIG. 6C), the second multi-port valve **15b** is configured such that the flow of the mixture of solvents provided from solvent supplies **14a, 14b** does not pass through the sections of tubing leading to the tee-junctions **31a, 31b** but, instead, flows directly from the second valve to the chromatographic column **18.** This configuration precludes the possibility of the elution solvent mixtures being unnecessarily split into two portions at the splitting tee-junction **31a** and minimizes the total length of the fluid pathway between the second pump **13b** and the column **18.** This configuration thus improves performance efficiency of the system **50** relative to the system **30.**

FIG. 7 illustrates another chromatography system **55,** for which only the injection configuration is shown. The system **55** shown in FIG. 7 is a modified version of the system **50** shown in FIG. 6 that is configured such that the flow of the one or more solvents provided from solvent supplies **14a, 14b** only passes through the second multi-port valve **15b** a single time. The configuration shown in FIG. 7 frees two ports of the six-port valve **15b.** The freed ports could thus be employed for other purposes or fluid connections. Alternatively, the six-port valve **15b** shown in FIG. 7 could be replaced by a less-costly four-port valve.

FIG. 8 illustrates the elution step of a chromatography system **37** that is a variation of the system **30** shown in FIG. 4. The system **37** is set up for isocratic elution. Accordingly, the gradient valve **16** of the system **30** is removed and the two solvent supplies **14a, 14b** are replaced by a single solvent supply **14c** which may contain a pre-mixed mixture of solvents that are optimized for use as a mobile phase during the elution step. The solvent mixture may be chosen so as to be sufficiently polar or aqueous so as to adequately dilute the organic content of the sample during mixing at the mixing tee-junction **31b,** yet sufficiently non-polar such that analytes in the sample migrate through the column under the influence of the flow of the mobile phase. Still further, the separate column injection and elution steps could be replaced by a single "flow-through" step, similar to traditional chromatography, in which analytes are both introduced into and separated within the column under a continuous flow of the particularly-chosen solvent composition.

Isocratic elution may also be achieved using many other variations or configurations. For example, the basic structure of the system **30** could be retained, but modified such that the solvent supply **14a** contains a pre-mixed mixture of solvents that are optimized for use during an isocratic elution step. In such a configuration, the valve **16** may be operated, during the injection step, so as to draw solvent from solvent supply **14b,** as described previously. However, during the elution step, the valve **16** would be operated so as to draw solvent only from the solvent supply **14a** containing the solvent mixture (instead of from both solvent supplies). In this situation, the gradient valve **16** could be replaced by a simpler three-port switching valve that only draws solvent from a chosen one of the solvent supplies, but not from both. One of ordinary skill in the art will readily recognize how to modify other embodiments illustrated in the accompanying drawings for use with isocratic elution.

FIG. 9 is a comparison between chromatograms obtained employing a conventional chromatography configuration and employing a configuration in accordance with the invention. The chromatogram **91** and the chromatogram **93** represent experimental detection of testosterone after processing through the conventional chromatography system and a system in accordance with the invention, respectively. In each instance, the sample was a 100 µL injection of a 2 µg/mL solution of testosterone in methanol.

Because of the high concentration of organic solvent (methanol), the chromatogram **91** obtained using the conventional configuration exhibits a large spurious peak **92** at the initial solvent front at which the first compounds to exit the column are detected. The spurious peak **92** results from the detection of testosterone which remained solution in the mobile phase within the column as a result of its inability to be fully adsorbed onto the column stationary phase during column injection. The chromatogram **91** also exhibits a small peak **94** attributable to testosterone observed at the expected retention time of approximately 1.75 minutes. Although the peak **94** represents detection of a small proportion of testosterone which was adsorbed onto the stationary phase, its intensity severely under-represents the concentration of testosterone in the sample because a significant proportion of the testosterone exited the column at the beginning of the elution and because an unknown quantity of testosterone was flushed through the column during the injection step. The peak **94** also exhibits poor form, as illustrated by the peak fronting region **95.**

By contrast, the chromatogram **93** obtained using the chromatographic system in accordance with the invention exhibits only a single well formed peak **96** at the testosterone retention time. The intensity of and area under the peak **96** are greater than the corresponding features of the peak **94** and are representative of the testosterone concentration because essentially all of this analyte was retained on the column stationary phase during injection, as evidenced by the absence of any spurious peak at the beginning of the elution.

FIG. 12 is a flow diagram of a chromatography method in accordance with the present teachings. In the first step, Step **102,** of the method **100** (FIG. 12), a sample that contains analytes of interest is provided in a conduit. For example, the injection loop - that is, sample loop tubing **2c** illustrated in several of the appended drawings - may serve as a suitable conduit within which the sample is provided. In the next step, Step **104,** a solvent for the sample is provided. A mixture of solvents may alternatively be provided.

In the next step, Step **106,** of the method **100** (FIG. 12) the solvent or solvents is (are) caused to simultaneously flow into the conduit so as to expel the sample from the conduit and flow into and through a second conduit so as to exit the second conduit. The pathway through to the first conduit may include a pathway through a valve to which the first conduit is fluidically coupled and the second conduit may be a bypass tubing that bypasses the valve. The simultaneous flow through the two pathways may be caused by splitting a total flow of the solvent (or solvents) from a solvent source between the two pathways by a splitting junction - such as a splitting tee-junction - or by a three-port valve that can be configured - either manually or automatically - to provide a variable splitting ratio between the two pathways. The splitting ratio may also be determined by the difference in resistance to fluid flow between the two pathways. The pathway having the smallest fluid resistance will receive the greater portion of the flow and vice versa. The fluid resistance - and, consequently, the flow splitting ratio - may be chosen or fixed by the difference between the inner diameters within each of the pathways or by the lengths of the pathways.

Next, in Step **108** of the method **100** (FIG. 12), the expelled sample and the solvent or solvents that passed through and exited the second conduit are mixed at a mixing junction, such as a mixing tee-junction. In Step **110,** the mixture is provided to a chromatographic column. If "flow-through" isocratic elution is employed, such that there are not separate column injection and elution steps, then the method **100** may terminate after Step **110.** In such a situation, a fluid of a single composition, possibly comprising a solvent mixture, is employed to both transport sample analytes into the column and to facilitate differential migration of the analytes through the column as a result of partitioning of the analytes between the mobile phase and a stationary phase within the column. Partitioning of the analytes into the stationary phase may be facilitated by the prior mixing at the mixing tee-junction (in the previous Step **108**) so as to dilute the concentrations of organic solvents in the sample. In some embodiments, the thus-separated analytes may be passed to a detector for sequential detection.

If gradient elution is employed, then the mixture is provided to the column, in Step 110, such that analytes become adsorbed to the stationary phase within the chromatographic column. The adsorption may be facilitated by mixing at the mixing tee-junction (in the previous Step **108**) so as to dilute the concentrations of organic solvents in the sample. In the case of gradient elution, then Step **112** is executed, in which a mobile-phase fluid comprising a second solvent and having a time-varying composition is provided to the chromatographic column such that the adsorbed analytes are sequentially desorbed from the stationary phase and expelled from the chromatographic column. Step **112** may also be executed in certain instances of isocratic elution. In such instances, the mobile phase composition is not time-varying during the course of elution. In some embodiments, the separated analytes exiting the column may be passed to a detector for sequential detection.

The discussion included in this application is intended to serve as a basic description. Although the present invention has been described in accordance with the various embodiments shown and described, the reader should be aware that the specific discussion may not explicitly describe all embodiments possible. One of ordinary skill in the art will readily recognize that many alternatives are implicit and that there could be many variations to the embodiments described. For example, one of ordinary skill in the art would readily recognize that, in accordance with common procedure, an additional multiport valve may be employed in variations of the illustrated chromatographic systems. For instance, such an additional valve may be fluidically disposed between the mixing tee-junction **31b** and the column **18** and may comprise ports and tubing segments that are fluidically coupled to additional waste containers or solvent sources for the purpose of flushing tubing lines, flushing analytes out of the column in either a forward direction or a reverse direction, etc. Additionally, one of ordinary skill in the art would readily recognize that, in accordance with common procedure, an additional column may be employed in various of the illustrated chromatographic systems. For instance, many chromatographic systems employ two columns - a first column comprising a guard column or cleanup column and the second column comprising an analytical column.

Still further, although most of the above discussion relating to the invention pertains to reversed phase high performance liquid chromatography (RP-HPLC), it should be noted the invention also applies to any HPLC system where the injected sample is in a solution that needs to be modified by the mobile phase prior to reaching the HPLC column. For example, if a hydrophilic interaction liquid chromatography (HILIC) column were employed instead of a RP-HPLC column, then column injection of hydrophilic analytes would, under normal circumstances, typically employ an organic-rich mobile phase. However, if the sample itself comprises an over-abundance of water (such that not all of the analytes would be adsorbed onto the HILIC column stationary phase), then one could employ the above teachings as described - together with minor obvious modifications - so as to dilute the water concentration with an organic fluid. If a normal phase column were employed, a first organic phase might be diluted with a different organic phase of (for example) different hydrophobicity, but the invention would still be able to be applied. Accordingly, many modifications may be made by one of ordinary skill in the art without departing from the scope and essence of the invention. Neither the description nor the terminology is intended to limit the scope of the invention - the invention is defined only by the claims.

## Claims

1. A method for chromatographically separating analytes of a liquid sample, the method comprising:
(i) providing the sample (11) in a first conduit (2c);
(ii) providing a first solvent mixture (14a, 14b) for the sample;
(iii) causing a flow of the first solvent mixture to pass through a splitting junction (31a) so as to be split thereat into a first solvent flow portion that flows along a first pathway (2b, 2c, 2e) that includes the first conduit (2c) fluidly connected between a second conduit (2b) and a third conduit (2e) so as to expel the sample from the first conduit (2c), and a second solvent flow portion that simultaneously flows into and through a second pathway (2g) so as to exit said second pathway;
(iv) simultaneously providing the expelled sample and the exited first solvent mixture to a mixing tee-junction (31b) such that the expelled sample and the exited first solvent mixture mix thereat;
(v) providing the mixture of the expelled sample and the exited first solvent mixture to a chromatographic column (18) such that the analytes are transferred to the column (18) so as to become adsorbed to a stationary phase within the chromatographic column (18); and
(vi) causing a flow of a fluid comprising a second solvent mixture (14a, 14b) to pass through the splitting junction (31a) so as to be split thereat into a first fluid flow portion that flows along a third pathway (2b, 2e) that includes a fourth conduit fluidly connected between the second conduit (2b) and the third conduit (2e), wherein the fourth conduit bypasses the first conduit (2c), and a second fluid flow portion that simultaneously flows into and through the second pathway (2g) so as to exit said second pathway, wherein the composition of the fluid comprising the second solvent mixture varies with time and wherein the flow rate of the first fluid flow portion that flows along the third pathway is different from the flow rate of the second fluid flow portion that flows along the second pathway;
(vii) combining the first and second fluid flow portions of the fluid comprising the second solvent mixture at the mixing tee-junction (31b);
(viii) providing the combined first and second fluid flow portions of the fluid comprising the second solvent mixture to the chromatographic column (18) such that the adsorbed analytes are sequentially desorbed from the stationary phase and expelled from the chromatographic column (18), wherein the time variation of the composition of the fluid comprising the second solvent mixture is calibrated so as to compensate for the difference in flow rates of the first and second fluid flow portions along the third and second pathways respectively.

2. A method as recited in claim 1, wherein the step (ii) of providing a first solvent mixture (14a,14b) for the sample (11) comprises providing the first solvent mixture such that the first solvent mixture, when mixed with the sample at the mixing tee-junction (31b), causes dilution of the total organic concentration of the sample.

3. A method as recited in claim 1, wherein the step (ii) of providing a first solvent mixture (14a, 14b) for the sample (11) comprises providing the first solvent mixture such that the first solvent mixture, when mixed with the sample at the mixing tee-junction (31b), causes dilution of the total water concentration of the sample.

4. A method as recited in claim 1, wherein the splitting junction is a splitting tee-junction (31a), the step (iii) of causing a flow of the first solvent mixture to pass through a splitting junction further comprising causing the flow of the first solvent mixture to pass through the splitting tee-junction (31a) so as to be split thereat into the first solvent flow portion that flows along the first pathway and the second solvent flow portion that flows into and through the second pathway.

5. A method as recited in claim 1, wherein the splitting junction is a three-port valve (41), the step (iii) of causing a flow of the first solvent mixture to pass through a splitting junction further comprising causing the flow of the first solvent mixture to pass through the three-port valve (41) so as to be split thereat into the first solvent flow portion that flows along the first pathway and the second solvent flow portion that flows into and through the second pathway, said three-port valve having a flow adjustment mechanism (42) operable to control a ratio between flow rates of the first and second solvent flow portions.

6. A method as recited in claim 1, wherein the step (iii) of causing a flow of the first solvent mixture to pass through a splitting junction further comprises causing the first solvent flow portion to flow into the conduit (2c) through a multi-port valve (15) and the second solvent flow portion to flow through a second conduit (2g) that bypasses the multi-port valve.

7. A method as recited in claim 6, wherein the step (iii) further comprises setting a ratio between a flow rate of the first solvent flow portion and a flow rate of the second solvent flow portion by choosing a length or inner diameter of the second conduit (2g).

8. A chromatographic system for chromatographically separating analytes of a liquid sample provided from a sample source, the system comprising:
a multi-port valve (15) comprising:
a first port (p1) fluidically coupled to the sample source (11); and
at least a second port (p2), third port (p3), fourth port (p4) and fifth port (p5), wherein the multi-port valve comprises a first configuration in which the third (p3) and fifth (p5) ports are fluidically coupled and the second (p2) and fourth (p4) ports are fluidically coupled;
an injection loop conduit (2c) fluidically coupled to the second (p2) and third (p3) ports;
at least one source of solvent (14a, 14b) for the sample fluidically coupled to the fourth port (p4) so as to provide one or more solvents to the fourth port;
a fluidic pump (13b) fluidically coupled between the source of solvent (14a, 14b) and the fourth port (p4) operable to cause the one or more solvents to flow through the system;
a first tee-junction (31a) fluidically coupled between the fluidic pump (13b) and the fourth port (p4);
a chromatographic column (18) fluidically coupled to the fifth port (p5) so as to receive the liquid sample therefrom;
a second tee-junction (31b) fluidically coupled between the chromatographic column (18) and the fifth port (p5);
a bypass conduit (2g) fluidically coupled between the first (31a) and second (31b) tee-junctions,
wherein the bypass conduit (2g) or one of the first (31a) and second (31b) tee-junctions is configured such that, when the multi-port valve (15) is in its first configuration, the one or more solvents provided from the at least one solvent source (14a, 14b) under the operation of the pump (13b) are split into a first flow portion provided to the injection loop conduit (2c) and a second, greater flow portion provided to the bypass conduit (2g);
**characterized by** further comprising a second multi-port valve (15b) comprising:
a second-valve first port (q1) operable to provide the one or more solvents to the first tee-junction (31a) ;
a second-valve second port (q2) operable to receive the one or more solvents from the fluidic pump (13b);
a second-valve third port (q3) operable to provide the liquid sample or the one or more solvents to the chromatographic column (18); and
a second-valve fourth port (q4) operable to receive a combination of the first flow portion and the second flow portion from the second tee-junction (31b),
wherein the second multi-port valve (15b) comprises a first configuration in which the first (q1) and second (q2) ports are fluidically coupled and the third (q3) and fourth ports (q4) are fluidically coupled and a second configuration in which the second (q2) and third (q3) ports are fluidically coupled.

9. A chromatographic system as recited in claim 8, wherein first tee-junction comprises a flow adjustment mechanism operable to control a ratio between the first flow portion and the second flow portion.

10. A chromatographic system as recited in claim 9, wherein the flow adjustment mechanism is electronically coupled to a controller that is operable so as to control the ratio by controlling the flow adjustment mechanism.

11. A chromatographic system as recited in claim 10, wherein the at least one source of solvent comprises a first solvent source having a first solvent and a second solvent source having a second solvent, and further comprising:
a gradient valve fluidically coupled between the fluidic pump and the first and second solvent sources, the gradient valve operable to cause a mixture of the first and second solvents to be drawn out of the first and second solvent sources under the operation of the fluidic pump.

## Patentansprüche

1. Verfahren zum chromatographischen Trennen von Analyten einer Flüssigkeitsprobe, das Verfahren umfassend:
(i) Bereitstellen der Probe (11) in einer ersten Leitung (2c);
(ii) Bereitstellen einer ersten Lösungsmittelmischung (14a, 14b) für die Probe;
(iii) Veranlassen eines Flusses der ersten Lösungsmittelmischung durch eine Aufteilungsverzweigung (31a), sodass sie an dieser Stelle in einen ersten Lösungsmittelflussteil, der entlang eines ersten Weges (2b, 2c, 2e) fließt, der die erste Leitung (2c) fluidverbunden zwischen einer zweiten Leitung (2b) und einer dritten Leitung (2e) umfasst, um die Probe dadurch aus der ersten Leitung (2c) auszustoßen, und einen zweiten Lösungsmittelflussteil aufgeteilt wird, der gleichzeitig in und durch einen zweiten Weg (2g) fließt, um dadurch den zweiten Weg zu verlassen;
(iv)gleichzeitiges Bereitstellen der ausgeschlossenen Probe und der ausgetretenen ersten Lösungsmittelmischung an eine mischende T-Verzweigung (31b), sodass die ausgestoßene Probe und die ausgetretene erste Lösungsmittelmischung sich an dieser Stelle vermischen;
(v) Bereitstellen der Mischung aus der ausgestoßenen Probe und der ausgetretenen ersten Lösungsmittelmischung an eine chromatographische Säule (18), sodass die Analyten an die Säule (18) übertragen werden, um so in eine stationäre Phase innerhalb der chromatographischen Säule (18) adsorbiert zu werden; und
(vi) Veranlassen eines Flusses einer Flüssigkeit, die eine zweite Lösungsmittelmischung (14a, 14b) umfasst, durch die Aufteilungsverzweigung (31a), sodass sie an dieser Stelle in einen ersten Flüssigkeitsflussteil, der entlang eines dritten Weges (2b, 2e) fließt, der eine vierte Leitung fluidverbunden zwischen der zweiten Leitung (2b) und der dritten Leitung (2e) umfasst, wobei die vierte Leitung die erste Leitung (2c) überbrückt, und einen zweiten Lösungsmittelteil aufgeteilt wird, der gleichzeitig in und durch den zweiten Weg (2g) fließt, um dadurch den zweiten Weg zu verlassen, wobei die Zusammensetzung der Flüssigkeit, die die zweite Lösungsmittelmischung umfasst, mit der Zeit variiert und wobei sich die Flussrate des ersten Flüssigkeitsflussteils, der entlang des dritten Weges fließt, von der Flussrate des zweiten Flüssigkeitsflussteils, der entlang des zweiten Weges fließt, unterscheidet;
(vii) Kombinieren der ersten und zweiten Flüssigkeitsflussteile der Flüssigkeit, die die zweite Lösungsmittelmischung umfasst, an der T-Verzweigung (31b);
(viii) Bereitstellen der kombinierten ersten und zweiten Flüssigkeitsflussteile der Flüssigkeit, die die zweite Lösungsmittelmischung umfasst, an die chromatographische Säule (18), so dass die adsorbierten Analyten sequenziell von der stationären Phase desorbiert werden und aus der chromatographischen Säule (18) ausgestoßen werden, wobei die Zeitvariation der Zusammensetzung der Flüssigkeit, die die zweite Lösungsmittelmischung umfasst, derart kalibriert ist, dass sie den Unterschied der Flussraten der ersten und zweiten Flüssigkeitsflussteile entlang des dritten bzw. zweiten Weges ausgleicht.

2. Verfahren nach Anspruch 1, wobei der Schritt (ii) des Bereitstellens einer ersten Lösungsmittelmischung (14a, 14b) für die Probe (11) das Bereitstellen der ersten Lösungsmittelmischung derart umfasst, dass die Lösungsmittelmischung, wenn sie mit der Probe an der mischenden T-Verzweigung (31b) vermischt wird, die Verdünnung der gesamten organischen Konzentration der Probe verursacht.

3. Verfahren nach Anspruch 1, wobei der Schritt (ii) des Bereitstellens einer ersten Lösungsmittelmischung (14a, 14b) für die Probe (11) das Bereitstellen der ersten Lösungsmittelmischung derart umfasst, dass die Lösungsmittelmischung, wenn sie mit der Probe an der mischenden T-Verzweigung (31b) vermischt wird, die Verdünnung der gesamten Wasserkonzentration der Probe verursacht.

4. Verfahren nach Anspruch 1, wobei die Aufteilungsverzweigung eine Aufteilungs-T-Verzweigung (31a) ist, wobei der Schritt (iii) des Veranlassens eines Flusses der ersten Lösungsmittelmischung durch eine Aufteilungsverzweigung ferner das Veranlassen des Flusses der ersten Lösungsmittelmischung durch die T-Verzweigung (31a) umfasst, so dass sie an dieser Stelle in den ersten Lösungsmittelflussteil, der entlang des ersten Weges fließt, und den zweiten Lösungsmittelflussteil aufgeteilt wird, der in und durch den zweiten Weg fließt.

5. Verfahren nach Anspruch 1, wobei die Aufteilungsverzweigung eine drei Anschlüsse aufweisende Ventilvorrichtung (41) ist, wobei der Schritt (iii) des Veranlassens eines Flusses der ersten Lösungsmittelmischung durch eine Aufteilungsverzweigung ferner das Veranlassen des Flusses der ersten Lösungsmittelmischung durch die drei Anschlüsse aufweisende Ventilvorrichtung (41) umfasst, so dass sie an dieser Stelle in den ersten Lösungsmittelflussteil, der entlang des ersten Weges fließt, und den zweiten Lösungsmittelflussteil, der in und durch den zweiten Weg fließt, aufgeteilt wird, wobei die drei Anschlüsse aufweisende Ventilvorrichtung einen Flussanpassungsmechanismus (42) aufweist, der dazu ausgelegt ist, ein Verhältnis zwischen Flussraten der ersten und zweiten Lösungsmittelflussteile zu steuern.

6. Verfahren nach Anspruch 1, wobei der Schritt (iii) des Veranlassens eines Flusses der ersten Lösungsmittelmischung durch eine Aufteilungsverzweigung ferner das Veranlassen des Flusses des ersten Lösungsmittelflussteils in die erste Leitung (2c) durch eine mehrere Anschlüsse aufweisende Ventilvorrichtung (15) und des zweiten Lösungsmittelflussteils durch eine zweite Leitung (2g), die die mehrere Anschlüsse aufweisende Ventilvorrichtung überbrückt, umfasst.

7. Verfahren nach Anspruch 6, wobei der Schritt (iii) ferner das Einstellen eines Verhältnisses zwischen einer Flussrate des ersten Lösungsmittelflussteils und einer Flussrate des zweiten Lösungsmittelflussteils umfasst, indem eine Länge oder ein innerer Durchmesser der zweiten Leitung (2g) ausgewählt wird.

8. Chromatographisches System zum chromatographischen Trennen von Analyten einer Flüssigkeitsprobe, die von einer Probenquelle bereitgestellt wurde, das System umfassend:
eine mehrere Anschlüsse aufweisende Ventilvorrichtung (15), umfassend:
einen ersten Anschluss (p1), der mit der Probenquelle (11) fluidverbunden ist;
mindestens einen zweiten Anschluss (p2), dritten Anschluss (p3), vierten Anschluss (p4) und fünften Anschluss (p5), wobei die mehrere Anschlüsse aufweisende Ventilvorrichtung eine erste Konfiguration umfasst, worin der dritte (p3) und fünfte (p5) Anschluss fluidverbunden sind und der zweite (p2) und vierte (p4) Anschluss fluidverbunden sind;
eine Injektionsschleifenleitung (2c), die mit dem zweiten (p2) und dritten (p3) Anschluss fluidverbunden ist;
mindestens eine Quelle mit Lösungsmittel (14a, 14b) für die Probe, die mit dem Vierten Anschluss (p4) fluidverbunden ist, um dem vierten Anschluss eines oder mehrere Lösungsmittel bereitzustellen;
eine fluidische Pumpe (13b), die zwischen der Quelle mit Lösungsmittel (14a, 14b) und dem vierten Anschluss (p4) fluidverbunden ist und dazu ausgelegt, das eine oder mehrere Lösungsmittel zu veranlassen, durch das System zu fließen;
eine erste T-Verzweigung (31a), die zwischen der fluidischen Pumpe (13b) und dem vierten Anschluss (p4) fluidverbunden ist;
eine chromatographische Säule (18), die mit dem fünften Anschluss (p5) fluidverbunden ist, um davon die Flüssigkeitsprobe zu empfangen;
eine zweite T-Verzweigung (31b), die zwischen der chromatographischen Säule (18) und dem fünften Anschluss (p5) fluidverbunden ist;
eine Überbrückungsleitung (2g) die zwischen der ersten (31a) und der zweiten (31b) T-Verzweigung fluidverbunden ist;
wobei die Überbrückungsleitung (2g) oder eine der ersten (31a) und zweiten (31b) T-Verzweigungen so konfiguriert ist, dass, wenn sich die mehrere Anschlüsse aufweisende Ventilvorrichtung (15) in ihrer ersten Konfiguration befindet, das eine oder mehrere von der mindestens einen Lösungsmittelquelle (14a, 14b) bereitgestellte Lösungsmittel unter Betrieb der Pumpe (13b) in einen ersten Flussteil, der der Injektionsschleifenleitung (2c) bereitgestellt wird, und einen zweiten, größeren Flussteil, der der Überbrückungsleitung (2g) bereitgestellt wird, aufgeteilt wird;
**dadurch gekennzeichnet, dass** es ferne eine zweite mehrere Anschlüsse aufweisende Ventilvorrichtung (15b) umfasst, umfassend:
einen ersten Anschluss (q1) des zweiten Ventils, dazu ausgelegt, der ersten T-Verzweigung (31a) das eine oder mehrere Lösungsmittel bereitzustellen;
einen zweiten Anschluss (q2) des zweiten Ventils, dazu ausgelegt, das eine oder mehrere Lösungsmittel von der fluidischen Pumpe (13b) zu empfangen;
einen dritten Anschluss (q3) des zweiten Ventils, dazu ausgelegt, der chromatographischen Säule (18) die Flüssigkeitsprobe oder das eine oder mehrere Lösungsmittel bereitzustellen; und
einen vierten Anschluss (q4) des zweiten Ventils, dazu ausgelegt, eine Kombination des ersten Flussteils und des zweiten Flussteils von der zweiten T-Verzweigung (31b) zu empfangen,
wobei die zweite mehrere Anschlüsse aufweisende Ventilvorrichtung (15b) eine erste Konfiguration umfasst, in welcher der erste (q1) und der zweite (q2) Anschluss fluidverbunden sind und der dritte (q3) und der vierte Anschluss (q4) fluidverbunden sind, und eine zweite Konfiguration, in welcher der zweite (q2) und der dritte (q3) Anschluss fluidverbunden sind.

9. Chromatographisches System nach Anspruch 8, wobei die T-Verzweigung einen Flussanpassungsmechanismus umfasst, der dazu ausgelegt ist, ein Verhältnis zwischen dem ersten Flussteil und dem zweiten Flussteil zu steuern.

10. Chromatographisches System nach Anspruch 9, wobei der Flussanpassungsmechanismus elektronisch mit einer Steuerung gekoppelt ist, die dazu ausgelegt ist, das Verhältnis durch die Steuerung des Flussanpassungsmechanismus zu steuern.

11. Chromatographisches System nach Anspruch 10, wobei die mindestens eine Quelle mit Lösungsmittel eine erste Lösungsmittelquelle mit einem ersten Lösungsmittel und eine zweite Lösungsmittelquelle mit einem zweiten Lösungsmittel umfasst, und weiter umfassend:
ein Steigungsventil, das zwischen der fluidischen Pumpe und der ersten und zweiten Lösungsmittelquelle fluidverbunden ist, wobei das Steigungsventil dazu ausgelegt ist, eine Mischung des ersten und des zweiten Lösungsmittels zu veranlassen, die unter Betrieb der fluidischen Pumpe Aus der ersten und der zweiten Lösungsmittelquelle gezogen wird.

## Revendications

1. Procédé de séparation par voie chromatographique d'analytes d'un échantillon de liquide, le procédé comprenant les étapes consistant à :
(i) fournir l'échantillon (11) dans un premier conduit (2c) ;
(ii) fournir un premier mélange de solvant (14a, 14b) pour l'échantillon ;
(iii) amener un écoulement du premier mélange de solvant à passer à travers une jonction de division (31a) de manière à y être divisé en une première partie d'écoulement de solvant qui s'écoule le long d'un premier trajet (2b, 2c, 2e) qui comprend le premier conduit (2c) en communication fluidique entre un deuxième conduit (2b) et un troisième conduit (2e) de manière à expulser l'échantillon du premier conduit (2c), et une seconde partie d'écoulement de solvant qui s'écoule simultanément dans un deuxième trajet (2g) et à travers celui-ci de manière à le décharger dudit deuxième trajet ;
(iv) fournir simultanément l'échantillon expulsé et le premier mélange de solvant déchargé à une jonction de mélange en T (31b) de sorte que l'échantillon expulsé et le premier mélange de solvant déchargé s'y mélangent ;
(v) fournir le mélange de l'échantillon expulsé et du premier mélange de solvant déchargé à une colonne chromatographique (18) de sorte que les analytes soient transférés à la colonne (18) afin d'être adsorbés dans une phase stationnaire au sein de la colonne chromatographique (18) ; et
(vi) amener un écoulement d'un fluide comprenant un deuxième mélange de solvant (14a, 14b) à passer à travers la jonction de division (31a) de manière à y être divisé en une première partie d'écoulement de fluide qui s'écoule le long d'un troisième trajet (2b, 2e) qui comprend un quatrième conduit en communication fluidique entre le deuxième conduit (2b) et le troisième conduit (2e), dans lequel le quatrième conduit contourne le premier conduit (2c), et une seconde partie d'écoulement de fluide qui s'écoule simultanément dans le deuxième trajet (2g) et à travers celui-ci de manière à se décharger dudit deuxième trajet, dans lequel la composition du fluide comprenant le second mélange de solvant varie avec le temps et dans lequel le débit de la première partie d'écoulement de fluide qui s'écoule le long du troisième trajet est différent du débit de la seconde partie d'écoulement de fluide qui s'écoule le long du deuxième trajet ;
(vii) combiner la première et la seconde partie d'écoulement du fluide comprenant le second mélange de solvant au niveau de la jonction de mélange en T (31b) ;
(viii) fournir la première et la seconde partie d'écoulement de fluide combinées du fluide comprenant le second mélange de solvant à la colonne chromatographique (18) de sorte que les analytes adsorbés soient désorbés en séquence de la phase stationnaire et expulsées de la colonne chromatographique (18), dans lequel la variation dans le temps de la composition du fluide comprenant le second mélange de solvant est échantillonnée afin de compenser la différence de débits de la première et de la seconde partie d'écoulement de fluide le long des troisième et deuxième trajets, respectivement.

2. Procédé selon la revendication 1, dans lequel l'étape (ii) de fourniture d'un premier mélange de solvant (14a, 14b) pour l'échantillon (11) comprend la fourniture du premier mélange de solvant de sorte que le premier mélange de solvant, lorsqu'il est mélangé à l'échantillon au niveau de la jonction de mélange en T (31b), provoque la dilution de la concentration organique totale de l'échantillon.

3. Procédé selon la revendication 1, dans lequel l'étape (ii) de fourniture d'un premier mélange de solvant (14a, 14b) pour l'échantillon (11) comprend la fourniture du premier mélange de solvant de sorte que le premier mélange de solvant, lorsqu'il est mélangé à l'échantillon au niveau de la jonction de mélange en T (31b), provoque la dilution de la concentration d'eau totale de l'échantillon.

4. Procédé selon la revendication 1, dans lequel la jonction de division est une jonction de division en T (31a), l'étape (iii) visant à amener un écoulement du premier mélange de solvant à passer à travers une jonction de division comprenant en outre le fait d'amener l'écoulement du premier mélange de solvant à passer à travers la jonction de division en T (31a) de manière à y être divisé en première partie d'écoulement de solvant qui s'écoule à travers le premier trajet et en seconde partie d'écoulement de solvant qui s'écoule dans le deuxième trajet et à travers celui-ci.

5. Procédé selon la revendication 1, dans lequel la jonction de division est une vanne à trois orifices (41), l'étape (iii) visant à amener un écoulement du premier mélange de solvant à passer à travers une jonction de division comprenant en outre le fait d'amener l'écoulement du premier mélange de solvant à passer à travers la vanne à trois orifices (41) de manière à y être divisé en première partie d'écoulement de solvant qui s'écoule le long du premier trajet et en seconde partie d'écoulement de solvant qui s'écoule dans et à travers le deuxième trajet, ladite vanne à trois orifices ayant un mécanisme de réglage d'écoulement (42) qui est à même de commander un rapport entre les débits des première et seconde parties d'écoulement de solvant.

6. Procédé selon la revendication 1, dans lequel l'étape (iii) visant à amener un écoulement du premier mélange de solvant à passer à travers une jonction de division comprend en outre le fait d'amener la première partie d'écoulement de solvant à s'écouler dans le conduit (2c) à travers une vanne à orifices multiples (15) et la seconde partie d'écoulement de solvant à s'écouler à travers un deuxième conduit (2g) qui contourne la vanne à orifices multiples.

7. Procédé selon la revendication 6, dans lequel l'étape (iii) comprend en outre le réglage d'un rapport entre un débit de la première partie d'écoulement de solvant et un débit de la seconde partie d'écoulement de solvant en choisissant une longueur ou un diamètre interne du deuxième conduit (2g).

8. Système chromatographique pour séparer par voie chromatographique des analytes d'un échantillon de liquide tiré d'une source d'échantillon, le système comprenant :
une vanne à orifices multiples (15) comprenant :
un premier orifice (p1) couplé en mode fluidique à la source d'échantillon (11) ;
au moins un deuxième orifice (p2), un troisième orifice (p3), un quatrième orifice (p4) et un cinquième orifice (p5), dans lequel la vanne à orifices multiples comprend une première configuration, dans laquelle le troisième (p3) et le cinquième (p5) orifice sont couplés en mode fluidique et le deuxième (p2) et le quatrième (p4) orifice sont couplés en mode fluidique ;
un conduit à boucle d'injection (2c) couplé en mode fluidique au deuxième (p2) et au troisième (p3) orifice ;
au moins une source de solvant (14a, 14b) pour l'échantillon couplée en mode fluidique au quatrième orifice (p4) afin de fournir un ou plusieurs solvants au quatrième orifice ;
une pompe fluidique (13b) couplée en mode fluidique entre la source de solvant (14a, 14b) et le quatrième orifice (p4) et qui est à même d'amener les un ou plusieurs solvants à s'écouler à travers le système ;
une premier jonction en T (31a) couplée en mode fluidique entre la pompe fluidique (13b) et le quatrième orifice (p4) ;
une colonne chromatographique (18) couplée en mode fluidique au cinquième orifice (p5) de manière à en recevoir l'échantillon de liquide ;
une seconde jonction en T (31b) couplée en mode fluidique entre la colonne chromatographique (18) et le cinquième orifice (p5) ;
un conduit de contournement (2g) couplé en mode fluidique entre la première (31a) et la seconde (31b) jonction en T,
dans lequel le conduit de contournement (2g) ou l'une des première (31a) et seconde (31b) jonctions en T est configuré(e) de sorte que, lorsque la vanne à orifices multiples (15) est dans sa première configuration, les un ou plusieurs solvants fournis par l'au moins une source de solvant (14a, 14b) dans le cadre du fonctionnement de la pompe (13b) soient divisés en une première partie d'écoulement fournie au conduit à boucle d'injection (2c) et une seconde partie d'écoulement plus grande fournie au conduit de contournement (2g) ;
**caractérisé en ce qu'**il comprend en outre une seconde vanne à orifices multiples (15b) comprenant :
un premier orifice (q1) de la seconde vanne qui est à même de fournir les un ou plusieurs solvants à la première jonction en T (31a) ;
un deuxième orifice (q2) de la seconde vanne qui est à même de recevoir les un ou plusieurs solvants de la pompe fluidique (13b) ;
un troisième orifice (q3) de la seconde vanne qui est à même de fournir l'échantillon de liquide ou les un ou plusieurs solvants à la colonne chromatographique (18) ; et
un quatrième orifice (q4) de la seconde vanne qui est à même de recevoir une combinaison de la première partie d'écoulement et de la seconde partie d'écoulement de la seconde jonction en T (31b),
dans lequel la seconde vanne à orifices multiples (15b) comprend une première configuration dans laquelle les premier (q1) et deuxième (q2) orifices sont couplés en mode fluidique et le troisième (q3) et le quatrième (q4) orifice sont couplés en mode fluidique, et une seconde configuration dans laquelle le deuxième (q2) et le troisième (q3) orifice sont couplés en mode fluidique.

9. Système chromatographique selon la revendication 8, dans lequel la première jonction en T comprend un mécanisme de réglage d'écoulement qui est à même de commander un rapport entre la première partie d'écoulement et la seconde partie d'écoulement.

10. Système chromatographique selon la revendication 9, dans lequel le mécanisme de réglage d'écoulement est couplé au plan électronique à un dispositif de commande qui est à même de commander le rapport en commandant le mécanisme de réglage d'écoulement.

11. Système chromatographique selon la revendication 10, dans lequel l'au moins une source de solvant comprend une première source de solvant ayant un premier solvant et une seconde source de solvant ayant un second solvant, et comprenant en outre :
une vanne à gradient couplée en mode fluidique entre la pompe fluidique et la première et la seconde source de solvant, la vanne à gradient étant à même d'aspirer un mélange des premier et second solvant de la première et de la seconde source de solvant dans le cadre du fonctionnement de la pompe fluidique.
